# EUROPÄISCHE PATENTSCHRIFT

(11) **EP 3 221 093 B1**
(45) Veröffentlichungstag und Bekanntmachung des Hinweises auf die Patenterteilung: **09.02.2022**
(21) Anmeldenummer: 15794855.5
(22) Anmeldetag: 03.11.2015
(51) Int. Cl.: B25J 9/00, B25J 17/02

(54) **VORRICHTUNG UND VERFAHREN ZUR HANDHABUNG UND/ODER ZUM MANIPULIEREN VON ARTIKELN WIE GEBINDEN ODER STUECKGUETERN**
DEVICE AND METHOD FOR HANDLING AND/OR MANIPULATING ARTICLES SUCH AS CONTAINERS OR PIECE GOODS
DISPOSITIF ET PROCÉDÉ DE MANUTENTION ET/OU DE MANIPULATION D'ARTICLES TELS QUE DES ENSEMBLES D'ARTICLES OU DES COLIS

(30) Priorität: 17.11.2014 DE 102014223407
(43) Veröffentlichungstag der Anmeldung: 27.09.2017
(73) Patentinhaber: Krones Aktiengesellschaft, 93073 Neutraubling (DE)
(72) Erfinder: HARTL, Michael, 93073 Neutraubling (DE); WESTERMEIER, Christian, 93073 Neutraubling (DE); HAAS, Johann, 93073 Neutraubling (DE); UNTERSEHER, Josef, 93073 Neutraubling (DE); KOLLMUSS, Manuel, 93073 Neutraubling (DE); ZEINER, Peter, 93073 Neutraubling (DE)
(74) Vertreter: Benninger, Johannes
(86) Internationale Anmeldenummer: PCT/EP2015/075560
(87) Internationale Veröffentlichungsnummer: WO 2016/078906

(56) Entgegenhaltungen:
- EP-A1- 1 424 161
- EP-A2- 2 813 328
- DE-A1-102004 010 826
- DE-A1-102010 023 254
- Electro ABI B.V.: "ABIflexx Modular Handling System made in Holland", Haarlem - Holland , 28. April 2013 (2013-04-28), XP055242827, Gefunden im Internet: URL:www.keba.com/fileadmin/Brochures/ABI10 11_Abiflexx_6_pag__brochure_LR_los.pdf [gefunden am 2016-01-19]

## Beschreibung

Die vorliegende Erfindung betrifft eine Vorrichtung sowie ein Verfahren zur Handhabung und/oder zum Manipulieren von Artikeln, Gruppierungen, Gebinden oder Stückgütern mit den Merkmalen der unabhängigen Ansprüche 1 bzw. 5.

Bekannte Verpackungs- oder Palettieranlagen zum Stapeln und Palettieren von Objekten wie Paketen oder Gebinden mit mehreren Artikeln wie bspw. Getränkebehältern weisen üblicherweise Horizontalfördereinrichtungen mit Förderbändern auf, auf denen die Stückgüter oder Gebinde in ununterbrochener oder unregelmäßiger Folge zu einer Handhabungseinrichtung befördert werden. Dort erfolgt eine Verschiebung, Ausrichtung und/oder Drehen einzelner Stückgüter oder Gebinde, um diese in eine geeignete räumliche Anordnung zu bringen, die eine Basis bildet, um die Stückgüter oder Gebinde in nachgeordneten Gruppierstationen zu stapelfähigen Stückgut- oder Gebindelagen zusammenzuschieben.

In aktuellen Abfüll- und Verpackungslinien werden unterschiedliche Verfahren zum Drehen von Gebinden eingesetzt, die bspw. geeignete bewegliche Anschläge oder zwei Bänder mit unterschiedlichen Geschwindigkeiten aufweisen können. Bekannte Handhabungseinrichtungen können auch mit Greifern versehen sein, die bspw. an einem Portalsystem aufgehängt und in einem definierten Bewegungsbereich verschoben, rotiert und zudem in vertikaler Richtung bewegt werden können, um einzelne Stückgüter oder Gebinde zum Drehen und/oder Verschieben anheben zu können. Die Greifer können bspw. auch an Mehrachsroboterarmen angeordnet sein, die seitlich an den Horizontalfördereinrichtungen platziert sind.

Bei einer solchen Handhabung von Stückgütern oder Gebinden werden diese in der Praxis zum Zwecke eines Versetzens und/oder ihrer Ausrichtung erfasst, angehoben und in eine gewünschte Position bzw. Orientierung innerhalb einer Gruppierung überführt. Hierzu sind aus dem Stand der Technik bereits zahlreiche Greifvorrichtungen bekannt, so bspw. aus der EP 2 388 216 A1. Diese bekannte Greifvorrichtung besitzt zwei horizontal voneinander beabstandete und an einem zwischengeordneten Träger über mechanische Verbindungen angeordnete Greifarme. Die Greifarme können aufeinander zubewegt werden, um Objekte zu erfassen. Weiter sind die Greifarme bei definierter Krafteinwirkung in vertikaler Richtung und entgegen dem Träger vom Träger lösbar. Am freien Ende besitzen beide Greifarme Klemmbacken, die bei Erfassen von Objekten mit den jeweiligen Objekten in Oberflächenkontakt stehen.

Eine weitere Greifvorrichtung zeigt bspw. die DE 102 04 513 A1. Dort sind mehrere sich gegenüberliegende Greifarme in einem Mittelstück geführt. Ein Greifarm ist mittels eines Stellgliedes in Bezug auf einen weiteren Greifarm verschiebbar, so dass beide Greifarme geschlossen werden können. An den unteren Enden der Greifarme sind an den einander zugewandten Seiten Greifabschnitte zum Greifen von Baustoffpaketen vorgesehen.

Darüber hinaus gibt es weitere Handhabungseinrichtungen zum Greifen, Verschieben, Drehen und/oder Versetzen von Artikeln oder Gebinden, die auf sog. Deltarobotern oder Parallelkinematik-Robotern basieren, welche in einer dreiarmigen Ausführung auch als Tripode bezeichnet werden. Jeder der Arme eines solchen Tripods oder Deltaroboters besteht aus einem an der Basis um eine gestellfeste Schwenkachse angetrieben verschwenkbar angeordneten Oberarm und einem mit dem Oberarm und dem Koppelelement gelenkig verbundenen Unterarm. Der Unterarm ist hierbei passiv, frei von einem Antrieb zu dessen Verschwenkung gegenüber dem Oberarm oder dem Koppelelement ausgeführt. Einer oder mehrere der Unterarme können bspw. über Kugelgelenke mit den jeweils zugehörigen Oberarmen und dem Koppelelement verbunden sein. Ein solcher einzelner Unterarm ist frei schwenkbar und besitzt keine Eigenstabilität. Alle Oberarme eines Deltaroboters sind jeweils um vorzugsweise innerhalb einer gemeinsamen Ebene liegende Schwenkachsen verschwenkbar angetrieben gelagert. Drei mit dem Koppelelement und jeweils mit ihrem zugehörigen Oberarm verbundene Unterarme bilden in jeder Position ein Kraftdreieck, das sich nur bewegen lässt, wenn die drei Oberarme synchron die für sie berechnete Schwenkbewegungen um deren gestellfeste Schwenkachsen ausführen. Zwei oder mehr Schwenkachsen können parallel verlaufen; in der Regel weisen alle Schwenkachsen zwei Schnittpunkte mit anderen Schwenkachsen auf.

Wenigstens einer der Unterarme kann aus zwei auch als Elle und Speiche bezeichneten, ein Parallelogrammgestänge bildenden Gestängeelementen bestehen, um das Koppelelement in zumindest einer vorgegebenen Ausrichtung relativ zur Basis zu führen. Das Koppelelement dient dabei als Arbeitsplattform, die in der Praxis auch als Tool-Center-Point (TCP) bezeichnet wird. An diesem TCP kann ein Manipulator angeordnet sein, bspw. in Gestalt von gegeneinander zustellbaren Greifarmen o. dgl. Handhabungseinrichtung, so dass damit Artikel, Gebinde o. dgl. Stückgüter ergriffen und gedreht, verschoben oder von einer Auflagefläche angehoben werden können.

Der an der Arbeitsplattform bzw. dem TCP angeordnete Manipulator kann wahlweise drehbar gelagert sein, um den Manipulator ausrichten oder eine gewünschte Drehung der Artikel oder Stückgüter ausführen zu können. Anstelle einer antreibbar drehbaren Lagerung des Manipulators am Koppelelement ist grundsätzlich auch denkbar, den Manipulator unverdrehbar am Koppelelement anzuordnen und das gesamte Koppelelement unter entsprechender Ausgleichbewegung der Arme vermittels der Teleskopwelle gegenüber der Basis zu verdrehen. Damit einhergehend ist jedoch der Nachteil eines nur eingeschränkten Drehwinkels des Koppelelements. Die Einschränkung ergibt sich durch das Erreichen von Endanschlägen der gelenkigen Verbindungen der Oberarme und/oder des Koppelelements mit den Unterarmen und/oder dem gegenseitigen Kontakt benachbarter Unterarme.

Aus der DE 10 2010 006 155 A1, aus der DE 10 2013 208 082 A1 sowie aus der US 8 210 068 B1 sind derartige Handhabungseinrichtung mit Tripoden bekannt.

Die bekannten Parallelkinematik-Roboter bzw. sog. Tripoden können einen für den jeweiligen Roboter verfügbaren Arbeitsraum abdecken, der sich aus der Länge der Oberarme, dem Abstand der Befestigung der Oberarme zum Mittelpunkt einer gestellfesten Basis, der Länge der Unterarme, dem Abstand der Befestigung der Unterarme zum Mittelpunkt des sog. Tool-Center-Points am Werkzeugträger und dem maximalen Schwenkbereich der Oberarme ergibt. Dieser Arbeitsraum ist bezogen auf den Tool-Center-Point in z-Richtung ein Zylinder, an dessen unteren Rand sich ein Kugelsegment anschließt. Ferner wird der Arbeitsraum am oberen Rand gegebenenfalls noch eingeschränkt durch maximale Schwenkwinkel kardanischer Teleskop-Antriebswellen. Da der beschriebene Arbeitsraum für manche Anwendungs- und Einsatzfälle nicht ausreicht, kann es sinnvoll sein, ihn z.B. in z-Richtung (d.h. in vertikaler Richtung über der Arbeitsfläche) zu erhöhen, was jedoch normalerweise eine Verlängerung der Unterarme und Oberarme erfordert. Eine solche Verlängerung hat jedoch zur Folge, dass sich die Massen, Trägheitsmomente und Hebel erhöhen, was wiederum eine größere Dimensionierung der Antriebsstränge oder Verluste in der Dynamik zur Folge hat. Dieselben Nachteile können sich bei einer entsprechenden Vergrößerung des Arbeitsraumes in x-Richtung und/oder in y-Richtung ergeben.

Die Patentschrift DE 10 2004 010 826 A1 betrifft außerdem einen Roboter für Werkzeuge, der drei Trägerarme aufweist, welche über Gelenke mit einem Werkzeughalter in Verbindung stehen.

Ein erstes Ziel der Erfindung besteht darin, ein Handhabungssystem auf Basis eines Deltarobotoers mit einem vergrößerten Arbeitsraum zur Handhabung von Artikeln, Gebinden, Gruppierungen oder Stückgütern zur Verfügung zu stellen, das bei einfacher Steuerbarkeit eine gesteigerte Variabilität für unterschiedliche Anwendungsfälle aufweist.

Dieses erste Ziel der Erfindung wird mit dem Gegenstand des unabhängigen Anspruchs 1 erreicht. Merkmale vorteilhafter Weiterbildungen der Erfindung finden sich in den davon abhängigen Ansprüchen. So schlägt die vorliegende Erfindung zur Erreichung des genannten Ziels eine Vorrichtung zur Handhabung und/oder zum Manipulieren von Artikeln, Gruppierungen, Gebinden, Stückgütern oder dergleichen vor, die insbesondere einer Auflageebene und/oder einem Förderabschnitt einer Vorrichtung zur Handhabung, Förderung, Gruppierung und/oder Verpackung von Artikeln, Stückgütern, Gruppierungen und/oder Gebinden zugeordnet sein kann. Die als Greif- und/oder Manipulationseinheit ausgebildete Vorrichtung ist vorzugsweise oberhalb der Auflageebene und/oder dem Förderabschnitt angeordnet und umfasst eine obere Aufhängung, an welcher wenigstens drei separat angetriebene Stellarme gelenkig befestigt sind. Jeder dieser wenigstens drei Stellarme ist durch wenigstens zwei relativ zueinander schwenkbare Armabschnitte gebildet. Zudem kann jeder der wenigstens drei Stellarme unabhängig von den anderen Stellarmen betätigt werden, wodurch sich eine freie Beweglichkeit eines Manipulators ergibt, der ein oder mehrere Mittel zum Greifen der Artikel, Gruppierungen, Gebinde oder Stückgüter umfasst und der mit den wenigstens drei Stellarmen mechanisch gekoppelt ist, so dass durch eine Bewegung eines oder mehrerer der wenigstens drei Stellarme eine Position des Manipulators vorgegeben werden kann. Gemäß der vorliegenden Erfindung ist die obere Aufhängung mitsamt den Befestigungen der wenigstens drei Stellarme vertikal verstellbar und/oder gegenüber einer Vertikalen in eine Winkelstellung bringbar bzw. verkippbar.

Um diese Verstellbarkeit zu erreichen, ist die obere Aufhängung insbesondere in vertikal verstellbaren Linearführungen in einem Rahmen gelagert. Die Linearführungen sind bspw. jeweils durch Spindelantriebe gebildet, mit denen die obere Aufhängung höhenverstellbar im Rahmen gelagert ist. Wahlweise können die Linearführungen auch jeweils durch geeignete Linearantriebe gebildet sein, mit denen die obere Aufhängung höhenverstellbar im Rahmen gelagert ist. Diese Linearantriebe können z.B. durch elektromotorische Linearantriebe, hydraulische oder pneumatische Stellzylinder o. dgl. gebildet sein. Um die gewünschte Erweiterung des Arbeitsraumes des Manipulators zu erreichen, kann es sinnvoll sein, wenn die wenigstens drei Linearführungen jeweils ungefähr synchron verstellbar sind. Auf diese Weise kann die obere Aufhängung, an der die wenigstens drei Stellarme gelenkig befestigt sind, gleichmäßig gehoben und abgesenkt werden. Dies kann bspw. zur Anpassung an unterschiedliche Artikel-, Gebinde- oder Stückgutgrößen sinnvoll sein, um diese jeweils in einer sinnvollen Höhe greifen zu können. Bei einer Produktumstellung könnte es ansonsten aufgrund der Notwendigkeit, die Artikel, Gebinde oder Stückgüter im Bereich oder in Nähe ihrer jeweiligen Schwerpunkte zu greifen, notwendig sein, die Greifarme des Manipulators oberhalb oder unterhalb seiner idealen Arbeitshöhe einzusetzen, wodurch gleichzeitig der Arbeitsbereich der gesamten Vorrichtung nicht in vollem Umfang ausgenutzt werden kann. Ein Beispiel hierfür ist die Umstellung von großen Artikeln oder Stückgüter auf sehr kleine Artikel oder Stückgüter, die einen tieferen Angriffspunkt für das Ansetzen der Greifarme aufweisen als die zuvor gehandhabten größeren Artikel oder Stückgüter. Je nach der Grunddimensionierung der Schwenkarme und der oberen Aufhängung ergibt sich hieraus aufgrund des in geringerer Höhe über der Auflagefläche für die Artikel zu betreibenden Manipulators eine reduzierte Reichweite für die maximalen Auslenkbewegungen des Manipulators. Diesen Problemen hilft die Erfindung dadurch ab, dass die vertikale Ausrichtung der oberen Aufhängung an diese Randbedingungen angepasst werden kann, wodurch unter allen auftretenden Bedingungen die maximale Beweglichkeit der Vorrichtung ausgeschöpft werden kann.

Bei einer alternativen Ausführungsvariante der erfindungsgemäßen Vorrichtung ist die obere Aufhängung über wenigstens drei verstellbare Verbindungspunkte im Rahmen gelagert, wobei die verstellbaren Verbindungspunkte jeweils mit Aktoren versehen sind, die unabhängig voneinander verstellbar sind, um die obere Aufhängung gegenüber dem Rahmen in vertikaler Richtung zu verstellen und/oder gegenüber der Vertikalen abwinkeln zu können. Bei dieser Variante ist nicht nur ein Absenken oder Anheben der oberen Aufhängung möglich, sondern zusätzlich deren Verschwenkung, Verkippung oder Abwinkelung gegenüber der Vertikalen, was zusätzliche Bewegungsfreiheitsgrade bei der Handhabung von Artikeln, Gruppierungen, Gebinden oder Stückgütern bzw. eine Vergrößerung des möglichen Arbeitsraumes für den Manipulator liefert.

Der Rahmen mit der darin höhenverstellbaren und/oder verschwenkbaren Vorrichtung zur Handhabung von Artikeln, Gruppierungen, Gebinden oder Stückgütern kann vorzugsweise einer Horizontalfördereinrichtung zur horizontalen Beförderung der Artikel, Gruppierungen, Gebinde oder Stückgüter durch den Arbeitsraum des wenigstens einen Mittels zum Greifen der Artikel, Gruppierungen, Gebinde oder Stückgüter bzw. unterhalb der oberen Aufhängung der Vorrichtung zugeordnet sein.

Der besondere Vorteil der erfindungsgemäßen Vorrichtung liegt darin, dass der Tripod oder Deltaroboter von seinem Arbeitsraum her kompakt und klein gehalten werden kann, so dass auch die Dimensionierung der Antriebe bei gleicher Dynamik nicht geändert werden muss bzw. kleiner ausfallen kann. Sämtliche Strukturkomponenten wie Oberarme, Unterarme und Gelenke können kleiner und leichter gebaut werden.

Ein weiteres Ziel der Erfindung besteht darin, ein verbessertes und vereinfachtes Verfahren zur Handhabung und/oder zum Manipulieren von Artikeln, Gruppierungen, Gebinden, Stückgütern oder dergleichen auf Basis eines Deltaroboters zur Verfügung zu stellen, das einen vergrößerten Arbeitsraum liefert. Dieses weitere Ziel der Erfindung wird mit dem Gegenstand des unabhängigen Verfahrensanspruchs erreicht. Merkmale vorteilhafter Weiterbildungen der Erfindung finden sich in den davon abhängigen Ansprüchen. So schlägt die vorliegende Erfindung zur Erreichung des genannten Ziels ein Verfahren zur Handhabung und/oder zum Manipulieren von Artikeln, Gruppierungen, Gebinden, Stückgütern oder dergleichen mit einer Vorrichtung gemäß einer der zuvor beschriebenen Ausführungsvarianten vor. Die für das Verfahren eingesetzte Vorrichtung umfasst eine obere Aufhängung, an welcher wenigstens drei angetriebene Stellarme gelenkig befestigt sind, wobei die wenigstens drei Stellarme jeweils aus wenigstens zwei relativ zueinander schwenkbaren Armabschnitten bestehen und unabhängig voneinander betätigt werden können. Sie weist zudem einen Manipulator auf, welcher ein oder mehrere Mittel zum Greifen der Artikel umfasst und mit den wenigstens drei Stellarmen mechanisch gekoppelt ist, so dass durch eine Bewegung eines oder mehrerer der wenigstens drei Stellarme eine Position des Manipulators vorgegeben werden kann. Die obere Aufhängung mitsamt den Befestigungen der wenigstens drei Stellarme ist vertikal verstellbar und/oder gegenüber einer Vertikalen in eine Winkelstellung bringbar, wodurch sich der vergrößerte Arbeitsraum ergibt.

Die obere Aufhängung ist mittels vertikal verstellbarer Linearführungen in einem Rahmen gelagert, so dass sie zur Erweiterung des Arbeitsraumes des wenigstens einen Mittels zum Greifen der Artikel, Gruppierungen, Gebinde oder Stückgüter je nach Bedarf in vertikaler Richtung verstellt werden kann. Bei dieser Verfahrensvariante werden die wenigstens drei Linearführungen zur Lagerung der oberen Aufhängung im Rahmen jeweils ungefähr synchron verstellt.

Die obere Aufhängung ist in wenigstens drei verstellbaren Verbindungs- oder Anlenkpunkten im Rahmen gelagert, so dass sie zur Erweiterung des Arbeitsraumes des wenigstens einen Mittels zum Greifen der Artikel, Gruppierungen, Gebinde oder Stückgüter in vertikaler Richtung verstellt und/oder gegenüber der Vertikalen abgewinkelt werden kann.

Die zu handhabenden, zu greifenden, zu drehenden und/oder zu verschiebenden Artikel, Gruppierungen, Gebinde oder Stückgüter werden vorzugsweise horizontal durch den Arbeitsraum des wenigstens einen Mittels zum Greifen der Artikel, Gruppierungen, Gebinde oder Stückgüter bzw. unterhalb der oberen Aufhängung der Vorrichtung befördert.

Eine besonders dynamische Verfahrensvariante sieht vor, dass die vertikale Verstellung und/oder die Winkelverstellung gegenüber der Vertikalen eine Komponente der Greif- und/oder Handhabungsvorgänge bei der Handhabung, dem Greifen, Drehen und/oder Verschieben der Artikel, Gruppierungen, Gebinde oder Stückgüter bildet. Alternativ hierzu kann die Höhenverstellung auch statisch erfolgen, typischerweise im Zusammenhang mit einem Produktwechsel, bei dem sich ein geändertes Höhenniveau des Bewegungsbereiches des Manipulators ergibt.

Hinsichtlich der Ausgestaltung des Deltaroboters, seinen Aufbau, seine Funktionsweise und seinen Bewegungsraum sei im Übrigen auf den Offenbarungsgehalt der DE 10 2013 106 004 A1 verwiesen, auf deren gesamten Inhalt hiermit ausdrücklich Bezug genommen wird.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Fig. 1 zeigt eine schematische Ansicht einer Ausführungsvariante einer erfindungsgemäßen Vorrichtung zur Handhabung und/oder zum Manipulieren von Artikeln, Gruppierungen, Gebinden oder Stückgütern.

Fig. 2 zeigt in einer weiteren schematischen Ansicht einen Teil der Vorrichtung gemäß Fig. 1 mit ihrem veränderlichen Arbeitsbereich.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung bzw. das erfindungsgemäße Verfahren ausgestaltet sein können und stellen keine abschließende Begrenzung dar.

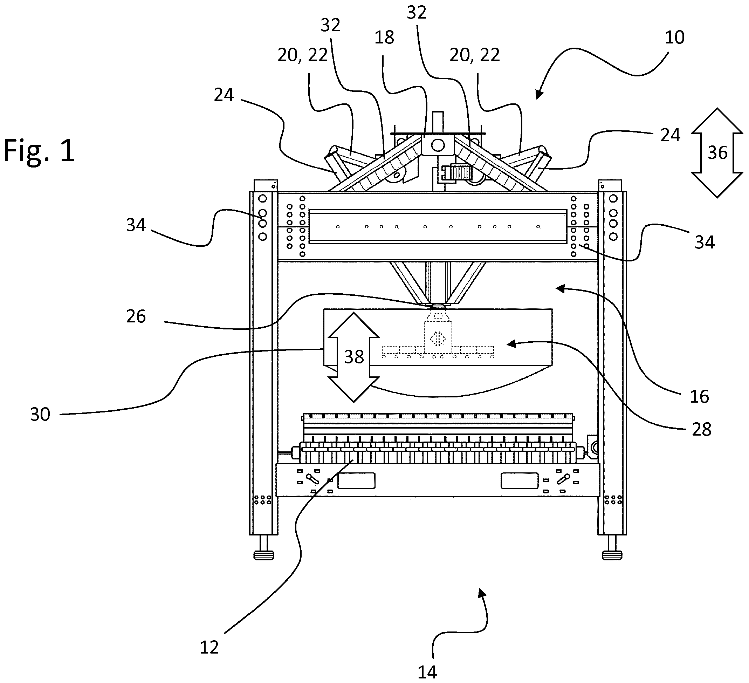

Einleitend sei an dieser Stelle darauf hingewiesen, dass die in den Figuren 1 bis 2 erläuterten Ausführungsvarianten der erfindungsgemäßen Vorrichtung und des erfindungsgemäßen Verfahrens sich auf einen Deltaroboter mit drei gleichartigen Schwenkarmen bzw. auf einen Tripod beziehen, der Teil einer Handhabungseinrichtung bzw. eines Manipulators zur Handhabung, zum Drehen, Verschieben oder Aufnehmen von Artikeln, Stückgütern oder Gebinden ist. Hinsichtlich einer möglichen Ausgestaltung des Deltaroboters bzw. Tripods, seines Aufbaus, seiner Funktionsweise und seines Bewegungsraumes sei z.B. auf den Offenbarungsgehalt der DE 10 2013 106 004 A1 verwiesen, auf deren gesamten Inhalt hiermit ausdrücklich Bezug genommen wird. Auf eine detaillierte Beschreibung der Bewegungsmodi, der Antriebe für die drei Schwenkarme etc. kann deshalb an dieser Stelle verzichtet werden.

Die schematische Darstellung der Fig. 1 zeigt eine denkbare Ausgestaltung einer erfindungsgemäßen Vorrichtung 10 zur Handhabung und/oder zum Manipulieren von hier nicht dargestellten Artikeln, Gruppierungen, Gebinden, Stückgütern oder dergleichen vor. Diese hier nicht dargestellten Artikel, Gruppierungen, Gebinde oder Stückgüter stehen insbesondere auf einer Auflageebene und/oder einem Förderabschnitt 12 einer Vorrichtung 14 zur Handhabung, Förderung, Gruppierung und/oder Verpackung von Artikeln, Stückgütern, Gruppierungen und/oder Gebinden bzw. werden auf dieser Auflageebene oder dem Förderabschnitt 12 in horizontaler Richtung bewegt. Die als Greif- und/oder Manipulationseinheit 16 ausgebildete Handhabungsvorrichtung 10 ist oberhalb der Auflageebene und/oder dem Förderabschnitt 12 angeordnet und umfasst eine obere Aufhängung 18, an der drei separat angetriebene Stellarme 20 gelenkig befestigt sind. Jeder dieser drei Stellarme 20 ist durch zwei relativ zueinander schwenkbare Armabschnitte 22 und 24 gebildet, nämlich jeweils durch einen Oberarm 22, der um eine horizontale Schwenkachse beweglich ist und an der oberen Aufhängung 18 gelenkig und motorisch angetrieben aufgehängt ist, sowie durch einen Unterarm 24, der gelenkig mit dem Oberarm 22 verbunden ist und nach unten führt, so dass sich alle drei Unterarme 24 in einem unteren Koppelabschnitt 26 treffen, dem sog. Tool-Center-Point bzw. TCP. An diesem unteren Koppelabschnitt 26 bzw. dem TCP befindet sich eine separat aktivierbare Greifeinrichtung 28 mit einem Paar gegeneinander zustellbarer Greifbacken, die der Erfassung, dem Greifen und/oder Manipulieren der auf dem Förderabschnitt 12 befindlichen Artikel, Gruppierungen, Gebinde oder Stückgüter dienen.

Wie dies bereits im Detail in der DE 10 2013 106 004 A1 beschrieben ist, kann jeder der drei Stellarme 20 unabhängig von den anderen Stellarmen 20 betätigt werden, wodurch sich eine freie Beweglichkeit des Manipulators 16 mitsamt seiner Greifeinrichtung 28 innerhalb eines definierten Bewegungsraumes 30 ergibt, wobei durch eine Bewegung eines oder mehrerer der insgesamt drei Stellarme 20 eine Position der Greifeinrichtung 28 innerhalb des Bewegungsraumes 30 vorgegeben werden kann. Dieser Bewegungs- oder Arbeitsraum 30 ist bezogen auf den Tool-Center-Point 26 in vertikaler Richtung bzw. in z-Richtung ein Zylinder, an dessen unteren Rand sich ein Kugelsegment anschließt, wie dies in Fig. 1 angedeutet ist.

Die obere Aufhängung 18 sieht im gezeigten Ausführungsbeispiel der Fig. 1 eine Abstützung über insgesamt drei schräge Stützträger 32 vor, die sich wiederum in einem Rahmengestell 34 der Vorrichtung 14 zur Handhabung, Förderung, Gruppierung und/oder Verpackung von Artikeln, Stückgütern, Gruppierungen und/oder Gebinden abstützen. Das Rahmengestell 34 kann bspw. ein starrer Stahlträgerrahmen o. dgl. mit verschraubten Vertikal- und Horizontalträgern sein, der im unteren Bereich den Horizontalförderabschnitt 12 aufnimmt. Gemäß der vorliegenden Erfindung ist die obere Aufhängung 18 mitsamt der Handhabungsvorrichtung 10 in vertikaler Richtung verstellbar, was durch den Doppelpfeil 36 angedeutet ist. Die vertikale Verstellung 36 der Handhabungsvorrichtung 10, die bspw. durch eine gleichmäßige vertikale Verstellbarkeit der Anlenkungen (nicht gezeigt) für die drei Stützträger 32 im oberen Bereich des Rahmengestells 34 erfolgen kann, sorgt gleichermaßen für eine entsprechende vertikale Verstellung 38 (siehe Doppelpfeil) des Bewegungsraumes 30 für den Manipulator 28.

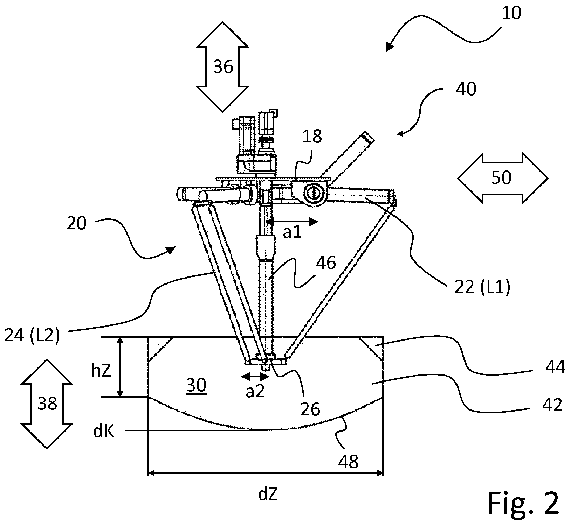

Die schematische Ansicht der Fig. 2 verdeutlicht die Verstellmöglichkeiten der Vorrichtung 10, die sich durch die Verstellbarkeit der oberen Aufhängung 18 im Rahmengestell 34 (vgl. Fig. 1) ergibt. Bei dem gezeigten Parallelkinematik-Roboter, dem sog. Tripod, ergibt sich der für den Roboter verfügbare Arbeitsraum 30 aus der Länge L1 der Oberarme 22, dem Abstand a1 der Befestigung der Oberarme 22 zum Mittelpunt der gestellfesten oberen Aufhängung 18, der Länge L2 der Unterarme 24, dem Abstand a2 der Befestigung der Unterarme 24 zum Mittelpunkt des Tool-Center-Points 26 am Werkzeugträger und dem maximalen Schwenkbereich 40 der Oberarme 22. Der maximale Schwenkbereich 40 ist in Fig. 2 durch eine obere Auslenkung des rechten Oberarms 22 angedeutet. Der daraus resultierende Arbeits- oder Bewegungsraum 30, den das Werkzeug (z.B. die Greifeinrichtung 28; vgl. Fig. 1) oberhalb des Förderabschnittes 12 (vgl. Fig. 1) abdecken kann, ist bezogen auf den Tool-Center-Point 26 ein niedriger Zylinder 42 mit einer Mantelhöhe hZ mit einer vertikalen Mittelachse, die mittig durch den TCP 26 verläuft.

Die in Fig. 2 angedeutete obere umlaufende Fase 44 des Zylinders 42 resultiert aus einer mechanischen Einschränkung durch maximale Schwenkwinkel einer kardanischer Teleskop-Antriebswelle 46, welche auch den maximal möglichen Verstellbereich der Stellarme 20 beschränkt. Die Antriebswelle 46, die mittig von der oberen Aufhängung 18 zum Werkzeugträger bzw. Koppelabschnitt 26 geführt ist, kann bedarfsweise für eine Drehung der Greifeinrichtung 28 (vgl. Fig. 1) sorgen. An den unteren Rand des Zylinders 42 des Bewegungsraumes 30 schließt sich ein Kugelsegment 48 an, das einen definierten Kugeldurchmesser dK aufweist, der größer ist als der Zylinderdurchmesser dZ des Zylinders 42.

Wie es bereits unter Bezugnahme auf Fig. 1 angedeutet wurde, lässt sich der Bewegungsraum oder Arbeitsraum 30 in vertikaler Richtung 38 verstellen, indem die obere Aufhängung 18 in Pfeilrichtung 36 vertikal verstellt wird, bspw. über hier nicht gezeigte Spindelantriebe oder über andere geeignete elektromotorische, hydraulische oder pneumatische Verstelleinrichtungen, die jeweils vertikal verstellbare Verbindungen zwischen den Stützträgern 32 und dem Rahmengestell 34 herstellen (vgl. Fig. 1). Ggf. kann über eine optionale horizontale Verstellung 50 der oberen Aufhängung 18 eine zusätzliche horizontale Anpassung des Arbeitsraumes 30 parallel zur Auflageebene erfolgen, wie dies in Fig. 2 angedeutet ist.

Die obere Aufhängung 18 ist in wenigstens drei verstellbaren Verbindungs- oder Anlenkpunkten im Rahmengestell 34 gelagert, so dass sie zur Erweiterung des Arbeitsraumes 30 der Greifeinrichtung 28 nicht nur in vertikaler Richtung verstellt, sondern ggf. auch gegenüber der Vertikalen abgewinkelt werden kann.

Eine besonders dynamische Verfahrensvariante kann vorsehen, dass die vertikale Verstellung 36 und/oder die Winkelverstellung (nicht gezeigt) gegenüber der Vertikalen eine Komponente der Greif- und/oder Handhabungsvorgänge bei der Handhabung, dem Greifen, Drehen und/oder Verschieben der Artikel, Gruppierungen, Gebinde oder Stückgüter bildet. Alternativ hierzu kann die Höhenverstellung auch statisch erfolgen, typischerweise im Zusammenhang mit einem Produktwechsel, bei dem sich ein geändertes Höhenniveau des Bewegungsbereiches 30 des Manipulators oder der Greifeinrichtung 28 ergibt.

Die erfindungsgemäße Vorrichtung 10 wurde unter Bezugnahme auf die in den Figuren 1 und 2 gezeigte bevorzugte Ausführungsvariante beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Vorrichtung, Handhabungsvorrichtung
- 12: Förderabschnitt, Horizontalförderabschnitt, Horizontalfördereinrichtung
- 14: Vorrichtung, Handhabungs-, Förder-, Gruppierungs-, Verpackungsvorrichtung
- 16: Greifeinheit, Manipulationseinheit, Manipulator
- 18: obere Aufhängung
- 20: Stellarm
- 22: Oberarm, oberer Armabschnitt
- 24: Unterarm, unterer Armabschnitt
- 26: Koppelabschnitt, Tool-Center-Point (TCP), Werkzeugträger
- 28: Greifeinrichtung
- 30: Bewegungsraum, Arbeitsraum
- 32: Stützträger
- 34: Rahmengestell, Rahmen
- 36: vertikale Verstellung, Höhenverstellung (der Vorrichtung 10, der oberen Aufhängung 18)
- 38: vertikale Verstellung, Höhenverstellung (des Bewegungsraumes 30)
- 40: maximaler Schwenkbereich (der Oberarme 22)
- 42: Zylinder (des Bewegungsraumes 30)
- 44: Fase, obere Beschränkung des Bewegungsraumes
- 46: Antriebswelle, Teleskop-Antriebswelle, kardanische Teleskop-Antriebswelle
- 48: Kugelsegment
- 50: horizontale Verstellung, Verschiebung (der Vorrichtung 10, der oberen Aufhängung 18)
- a1: Abstand (der Befestigung der Oberarme 22 zum Mittelpunt der oberen Aufhängung 18)
- a2: Abstand (der Befestigung der Unterarme 24 zum Mittelpunkt des Tool-Center-Points 26)
- L1: Länge der Oberarme 22
- L2: Länge der Unterarme 24
- hZ: Mantelhöhe hZ des Zylinders 42
- dZ: Durchmesser des Zylinders 42
- dK: Kugeldurchmesser (des Kugelsegments 48)

## Patentansprüche

1. Vorrichtung (10) zur Handhabung und/oder zum Manipulieren von Artikeln, Gruppierungen, Gebinden, Stückgütern oder dergleichen, umfassend:
- eine obere Aufhängung (18), an welcher wenigstens drei separat angetriebene Stellarme (20) gelenkig befestigt sind, wobei jeder der wenigstens drei Stellarme (20) durch wenigstens zwei relativ zueinander schwenkbare Armabschnitte (22,24) gebildet ist, und wobei die wenigstens drei Stellarme (20) unabhängig voneinander betätigt werden können,
- einen Manipulator (16), welcher ein oder mehrere Mittel zum Greifen der Artikel, Gruppierungen, Gebinde oder Stückgüter umfasst und mit den wenigstens drei Stellarmen (20) mechanisch gekoppelt ist, so dass durch eine Bewegung eines oder mehrerer der wenigstens drei Stellarme (20) eine Position des Manipulators (16) vorgegeben werden kann,
wobei die obere Aufhängung (18) mitsamt den Befestigungen der wenigstens drei Stellarme (20) vertikal verstellbar und/oder gegenüber einer Vertikalen in eine Winkelstellung bringbar ist, **dadurch gekennzeichnet, dass**
- die obere Aufhängung (18) in vertikal verstellbaren Linearführungen in einem Rahmen (34) gelagert ist und
- die Linearführungen jeweils durch Spindelantriebe oder Linearantriebe gebildet sind, mit denen die obere Aufhängung höhenverstellbar im Rahmen (34) gelagert ist.

2. Vorrichtung (10) nach Anspruch 1, bei der die obere Aufhängung (18) über wenigstens drei Linearführungen im Rahmen (34) gelagert ist, die jeweils ungefähr synchron verstellbar sind.

3. Vorrichtung (10) nach Anspruch 1 oder Anspruch 2, bei welcher der Rahmen (34) mit der Vorrichtung (10) zur Handhabung von Artikeln, Gruppierungen, Gebinden oder Stückgütern einer Horizontalfördereinrichtung (12) zur horizontalen Beförderung der Artikel, Gruppierungen, Gebinde oder Stückgüter durch den Arbeitsraum (30) des wenigstens einen Mittels zum Greifen der Artikel, Gruppierungen, Gebinde oder Stückgüter bzw. unterhalb der oberen Aufhängung (18) der Vorrichtung (10) zugeordnet ist.

4. Vorrichtung nach einem der Ansprüche 1 bis 3, bei welcher die Linearantriebe durch elektromotorische Linearantriebe oder durch hydraulische oder pneumatische Stellzylinder gebildet sind.

5. Verfahren zur Handhabung und/oder zum Manipulieren von Artikeln, Gruppierungen, Gebinden, Stückgütern oder dergleichen mit einer Vorrichtung (10), welche umfasst:
- eine obere Aufhängung (18), an welcher wenigstens drei angetriebene Stellarme (20) gelenkig befestigt sind, wobei die wenigstens drei Stellarme (20) jeweils aus wenigstens zwei relativ zueinander schwenkbaren Armabschnitten (22,24) bestehen und unabhängig voneinander betätigt werden können,
- einen Manipulator (16), welcher ein oder mehrere Mittel zum Greifen der Artikel umfasst und mit den wenigstens drei Stellarmen (20) mechanisch gekoppelt ist, so dass durch eine Bewegung eines oder mehrerer der wenigstens drei Stellarme (20) eine Position des Manipulators (16) vorgegeben werden kann,
wobei die obere Aufhängung (18) mitsamt den Befestigungen der wenigstens drei Stellarme (20) vertikal verstellbar und/oder gegenüber einer Vertikalen in eine Winkelstellung bringbar ist, **dadurch gekennzeichnet, dass**
- die obere Aufhängung (18) mittels vertikal verstellbarer Linearführungen, die durch Spindelantriebe oder Linearantriebe gebildet sind, in einem Rahmen (34) gelagert ist und zur Erweiterung eines Arbeitsraumes (30) des wenigstens einen Mittels zum Greifen der Artikel, Gruppierungen, Gebinde oder Stückgüter in vertikaler Richtung verstellt wird.

6. Verfahren nach Anspruch 5, bei dem die wenigstens drei Linearführungen zur Lagerung der oberen Aufhängung (18) im Rahmen (34) jeweils ungefähr synchron verstellt werden.

7. Verfahren nach Anspruch 5 oder Anspruch 6, bei dem die zu handhabenden, zu greifenden, zu drehenden und/oder zu verschiebenden Artikel, Gruppierungen, Gebinde oder Stückgüter horizontal durch den Arbeitsraum (30) des wenigstens einen Mittels zum Greifen der Artikel, Gruppierungen, Gebinde oder Stückgüter bzw. unterhalb der oberen Aufhängung (18) der Vorrichtung (10) befördert werden.

8. Verfahren nach einem der Ansprüche 5 bis 7, bei dem die vertikale Verstellung und/oder die Winkelverstellung gegenüber der Vertikalen eine Komponente der Greif-und/oder Handhabungsvorgänge bei der Handhabung, dem Greifen, Drehen und/oder Verschieben der Artikel, Gruppierungen, Gebinde oder Stückgüter bildet.

## Claims

1. A device (10) for the handling and/or manipulation of articles, groupings, packs, piece goods, or the like, the device (10) comprising:
- an upper suspension (18), to which at least three separately driven positioning arms (20) are articulately fastened, wherein each of the at least three positioning arms (20) is formed by at least two arm sections (22, 24) that are swivelable relative to one another, and wherein the at least three positioning arms (20) can be operated independently of one another,
- a manipulator (16), which comprises one or more means for the gripping of the articles, groupings, packs, or piece goods and which is mechanically coupled with the at least three positioning arms (20) such that a position of the manipulator (16) can be specified by a movement of one or more of the at least three positioning arms (20),
wherein the upper suspension (18), together with the fastenings of the at least three positioning arms (20), is vertically adjustable and/or bringable into an angular position in relation to a vertical, **characterised in that**
- the upper suspension (18) is mounted in vertically adjustable linear guides in a frame (34) and
- the linear guides are each formed by spindle drives or linear drives, with which the upper suspension is mounted in the frame (34) in a height-adjustable manner.

2. The device (10) according to claim 1, in which the upper suspension (18) is mounted in the frame (34) via at least three linear guides, which are in each instance adjustable approximately synchronously.

3. The device (10) according to claim 1 or claim 2, in which the frame (34) with the device (10) for the handling of articles, groupings, packs, or piece goods is assigned to a horizontal conveyor (12) for the horizontal conveyance of the articles, groupings, packs, or piece goods through the working space (30) of the at least one means for the gripping of the articles, groupings, packs, or piece goods or, as applicable, for the horizontal conveyance of the articles, groupings, packs, or piece goods below the upper suspension (18) of the device (10).

4. The device according to one of the claims 1 to 3, in which the linear drives are formed by electromotive linear drives or by hydraulic or pneumatic positioning cylinders.

5. A method for the handling and/or manipulation of articles, groupings, packs, piece goods, or the like with a device (10), the device (10) comprising:
- an upper suspension (18), to which at least three driven positioning arms (20) are articulately fastened, wherein the at least three positioning arms (20) are each made up of at least two arm sections (22, 24) that are swivelable relative to one another and that can be operated independently of one another,
- a manipulator (16), which comprises one or more means for the gripping of the articles and which is mechanically coupled with the at least three positioning arms (20) such that a position of the manipulator (16) can be specified by a movement of one or more of the at least three positioning arms (20),
wherein the upper suspension (18), together with the fastenings of the at least three positioning arms (20), is vertically adjustable and/or bringable into an angular position in relation to a vertical, **characterised in that**
- the upper suspension (18) is mounted in a frame (34) by means of vertically adjustable linear guides formed by spindle drives or linear drives and is adjusted in vertical direction to expand a working space (30) of the at least one means for the gripping of the articles, groupings, packs, or piece goods.

6. The method according to claim 5, in which the at least three linear guides for the mounting of the upper suspension (18) in the frame (34) are in each instance adjusted approximately synchronously.

7. The method according to claim 5 or claim 6, in which the articles, groupings, packs, or piece goods to be handled, gripped, rotated, and/or shifted are conveyed horizontally through the working space (30) of the at least one means for the gripping of the articles, groupings, packs, or piece goods or, as applicable, are conveyed below the upper suspension (18) of the device (10).

8. The method according to one of the claims 5 to 7, in which the vertical adjustment and/or the angle adjustment in relation to the vertical forms a component of the gripping procedures and/or of the handling procedures in the handling, gripping, rotating, and/or shifting of the articles, groupings, packs, or piece goods.

## Revendications

1. Dispositif (10) de manutention et/ou de manipulation d'articles, de groupements, de multipacks, de produits de détail ou similaires, comprenant:
- une suspension supérieure (18) sur laquelle sont fixés par articulation au moins trois bras de réglage (20) entraînés de manière séparée, dans lequel chacun desdits au moins trois bras de réglage (20) est constitué par au moins deux sections de bras (22, 24) aptes à pivoter l'une par rapport à l'autre, et dans lequel lesdits au moins trois bras de réglage (20) peuvent être actionnés indépendamment les uns des autres,
- un manipulateur (16) qui comprend un ou plusieurs moyen(s) de préhension des articles, groupements, multipacks ou produits de détail et qui est couplé mécaniquement auxdits au moins trois bras de réglage (20) de sorte qu'une position du manipulateur (16) peut être prédéterminée par un mouvement d'un ou de plusieurs desdits au moins trois bras de réglage (20),
dans lequel la suspension supérieure (18) avec les fixations desdits au moins trois bras de réglage (20) est réglable verticalement et/ou peut être amenée dans une position angulaire par rapport à une verticale, **caractérisé par le fait que**
- la suspension supérieure (18) est montée dans des guides linéaires réglables verticalement, dans un cadre (34), et
- les guides linéaires sont constitués chacun par des entraînements à broche ou des entraînements linéaires par lesquels la suspension supérieure est montée de manière réglable en hauteur dans le cadre (34).

2. Dispositif (10) selon la revendication 1, dans lequel la suspension supérieure (18) est montée dans le cadre (34) par l'intermédiaire d'au moins trois guides linéaires dont chacun peut être réglé de manière à peu près synchrone.

3. Dispositif (10) selon la revendication 1 ou la revendication 2, dans lequel le cadre (34) avec le dispositif (10) de manutention d'articles, de groupements, de multipacks ou de produits de détail est associé à un dispositif de transport horizontal (12) destiné à transporter horizontalement les articles, groupements, multipacks ou produits de détail à travers l'espace de travail (30) dudit au moins un moyen de préhension des articles, groupements, multipacks ou produits de détail ou bien au-dessous de la suspension supérieure (18) du dispositif (10).

4. Dispositif selon l'une quelconque des revendications 1 à 3, dans lequel les entraînements linéaires sont constitués par des entraînements linéaires électromoteurs ou par des vérins d'actionnement hydrauliques ou pneumatiques.

5. Procédé de manutention et/ou de manipulation d'articles, de groupements, de multipacks, de produits de détail ou similaires, au moyen d'un dispositif (10) qui comprend:
- une suspension supérieure (18) sur laquelle sont fixés par articulation au moins trois bras de réglage (20) entraînés, dans lequel lesdits au moins trois bras de réglage (20) sont constitués chacun par au moins deux sections de bras (22, 24) aptes à pivoter l'une par rapport à l'autre et peuvent être actionnés indépendamment les uns des autres,
- un manipulateur (16) qui comprend un ou plusieurs moyen(s) de préhension des articles et est couplé mécaniquement auxdits au moins trois bras de réglage (20) de sorte qu'une position du manipulateur (16) peut être prédéterminée par un mouvement d'un ou de plusieurs desdits au moins trois bras de réglage (20),
dans lequel la suspension supérieure (18) avec les fixations desdits au moins trois bras de réglage (20) est réglable verticalement et/ou peut être amenée dans une position angulaire par rapport à une verticale, **caractérisé par le fait que**
- la suspension supérieure (18) est montée dans un cadre (34) au moyen de guides linéaires réglables verticalement qui sont constitués par des entraînements à broche ou des entraînements linéaires, et est réglée dans la direction verticale pour élargir ledit espace de travail (30) dudit au moins un moyen de préhension des articles, groupements, multipacks ou produits de détail.

6. Procédé selon la revendication 5, dans lequel lesdits au moins trois guides linéaires pour le montage de la suspension supérieure (18) dans le cadre (34) sont réglés chacun de manière à peu près synchrone.

7. Procédé selon la revendication 5 ou la revendication 6, dans lequel les articles, groupements, multipacks ou produits de détail à manipuler, à saisir, à faire tourner et/ou à déplacer sont transportés horizontalement à travers l'espace de travail (30) dudit au moins un moyen de préhension des articles, groupements, multipacks ou produits de détail ou bien au-dessous de la suspension supérieure (18) du dispositif (10).

8. Procédé selon l'une quelconque des revendications 5 à 7, dans lequel le réglage vertical et/ou le réglage angulaire par rapport à la verticale est une composante des opérations de préhension et/ou de manutention lors de la manutention, de la préhension, de la rotation et/ou du déplacement des articles, groupements, multipacks ou produits de détail.
